# EUROPÄISCHE PATENTSCHRIFT

(11) **EP 3 855 025 B1**
(45) Veröffentlichungstag und Bekanntmachung des Hinweises auf die Patenterteilung: **13.07.2022**
(21) Anmeldenummer: 21151369.2
(22) Anmeldetag: 13.01.2021
(51) Int. Cl.: F15B 15/20, B66C 23/80, B66C 23/90, B66F 17/00, E02F 9/22, E02F 9/26, G01L 1/12, G01L 5/00

(54) **ZYLINDERKOLBENAGGREGAT MIT INTEGRIERTEM KRAFTMESSSYSTEM**
CYLINDER PISTON ASSEMBLY WITH INTEGRATED FORCE MEASURING SYSTEM
MODULE DE PISTON À CYLINDRE POURVU DE SYSTÈME DE MESURE DE FORCE INTÉGRÉ

(30) Priorität: 23.01.2020 DE 102020101615
(43) Veröffentlichungstag der Anmeldung: 28.07.2021
(73) Patentinhaber: Weber-Hydraulik GmbH, 74363 Güglingen (DE)
(72) Erfinder: JAVDANITEHRAN, Mehdi, 70806 Kornwestheim (DE); WINKLER, Torsten, 74397 Pfaffenhofen (DE)
(74) Vertreter: Lemcke, Brommer & Partner Patentanwälte Partnerschaft mbB

(56) Entgegenhaltungen:
- EP-A1- 2 615 439
- EP-A1- 3 272 696
- EP-B1- 2 769 104
- WO-A1-2017/060458
- DE-A1-102016 104 592
- DE-U1-202009 004 673
- DE-U1-202014 000 337

## Beschreibung

Die vorliegende Erfindung betrifft ein Zylinderkolbenaggregat, insbesondere einen Hydraulikzylinder, mit einem Arbeitszylinder einem innerhalb des Arbeitszylinders dichtend gelagerten, längsverschieblichen Kolben, der zumindest auf einer Seite eine Kolbenstange trägt, und mit einem Führungsstück, welches einen die Kolbenstange umgebenden Ringraum des Arbeitszylinders dichtend abschließt, wobei die Kolbenstange auf ihrem dem Kolben abgewandten Ende aus dem Arbeitszylinder herausragt und an dem Führungsstück gleitend gelagert ist und wobei das Zylinder/Kolben-Aggregat außerdem ein mit der Kolbenstange zusammenwirkendes Messsystem zum Erfassen einer auf der Kolbenstange lastenden Kraft aufweist.

Ein solches Zylinderkolbenaggregat wird beispielsweise als Stützenbauteil bei Arbeitsmaschinen wie Kranfahrzeugen, Arbeitsbühnen, Drehleitern oder dergleichen eingesetzt, bei denen eine sichere Abstützung gegenüber dem Untergrund erforderlich ist. Derartige Arbeitsmaschinen besitzen in der Regel Stützausleger, die zur Abstützung ausgefahren und abgesenkt werden können und zum Transport eingefahren werden. Die Abstützung selbst erfolgt hierbei über an den Stützauslegern vertikal angeordnete Hydraulikzylinder, die zur Abstützung ausgefahren werden. Hierbei ist es bekannt, aus Sicherheitsgründen an den Stützauslegern die auftretenden Stützkräfte zu messen, um hieraus die aktuelle Schwerpunktlage der Arbeitsmaschine und damit die Kippsicherheit zu ermitteln. Im Stand der Technik sind zu diesem Zweck verschiedentlich Lösungen beschrieben worden, bei denen Kraftsensoren im Stützenfuß oder in der Kolbenstange eines Hydraulikzylinders integriert sind, beispielsweise in der DE 10 2008 058 937 A1, der DE 20 2014 000 335 U1, DE 20 2014 000 337 U1 oder der DE 10 2008 058 758 A1. Hierbei zum Einsatz kommende Kraftsensoren können beispielsweise Dehnmessstreifen umfassen oder auf Dünnfilmkraftmesstechnik basieren. Hierbei ist wesentlich, dass die Kraftsensoren im Kraftfluss liegen müssen, das heißt, dass die zu messende Kraft auf den Kraftsensor einwirken muss. Ein solcher Kraftsensor ist daher hohen mechanischen Belastungen ausgesetzt und anfällig gegenüber Überlastung. Dies kann zu Nullpunktabweichungen bis hin zum Totalversagen eines Kraftsensors führen. Darüber hinaus ist auch die Integration eines solchen Kraftsensors in eine Kolbenstange aufwendig und fehleranfällig, da insbesondere die erforderlichen Leitungen für Stromversorgung und Signalführung über die relativ zueinander bewegten Zylinderkomponenten geführt werden müssen.

Die Erfindung hat sich zur Aufgabe gesetzt, ein Zylinderkolbenaggregat anzugeben, welches eine zuverlässige, robuste und technisch einfach zu realisierende Messeinrichtung zum Erfassen auf der Kolbenstange lastender Kräfte aufweist.

Die Aufgabe wird gelöst durch die Merkmale des Anspruchs 1. Vorteilhafte Ausgestaltungen sind den abhängigen Ansprüchen zu entnehmen.

Erfindungsgemäß ist bei einem Zylinderkolbenaggregat der eingangs genannten Art vorgesehen, dass die Kolbenstange zumindest abschnittsweise aus einem ferromagnetischen Material besteht und das Messsystem mindestens einen an dem Führungsstück angeordneten Messsensor und eine mit dem Messsensor verbundene Auswerteeinheit umfasst, wobei der Messsensor als berührungsloser Magnetsensor ausgeführt ist, welcher eine lastabhängige Veränderung einer magnetischen Eigenschaft des ferromagnetischen Materials detektiert, und die Auswerteeinheit ausgebildet ist, aus von dem Messsensor gelieferten Messsignalen in Abhängigkeit der Position des Kolbens anhand von gespeicherten, positionsabhängigen Referenzwerten die auf die Kolbenstange wirkende Kraft zu ermitteln.

Das erfindungsgemäße Kraftmesssystem beruht somit auf einer berührungslosen Kraftmessung durch Anlegen äußerer magnetischer Felder und Erkennen von Veränderungen hieran. Berührungslos bedeutet hierbei, dass der Messsensor selbst nicht im Kraftfluss liegen muss, sondern sozusagen von außen eine magnetische Messung an der Kolbenstange durchführt. Eine solche äußere, indirekte Kraftmessung ist nicht nur einfach und kostengünstig zu realisieren, und vereinfacht, da die Komponenten nicht innerhalb des Zylinderkolbenaggregats angeordnet sind, die Stromversorgung und Signalübertragung. Darüber hinaus ist eine solche, nicht im Kraftfluss liegende Kraftmesseinrichtung robust gegenüber Überlastung und äußeren Einflüssen.

Bei dem erfindungsgemäßen Aufbau sind der bzw. die Magnetsensoren ortsfest am Zylinder angeordnet und bewegen sich beim Ein- und Ausfahren der Kolbenstange nicht. Die Sensoren befinden sich darüber hinaus außerhalb des Hydraulikraums an der Außenseite des Zylinders. Dies ermöglicht eine einfache Konstruktion, insbesondere im Hinblick auf die Führung der Anschlussleitungen.

Untersuchungen haben jedoch ergeben, dass das eingesetzte berührungslose magnetische Messverfahren an der gegenüber dem Messsensor längsverschieblichen Kolbenstange alleine keine zufriedenstellend genauen Messergebnisse zu liefern vermag. Dies wird damit zu erklären sein, dass die unter Krafteinfluss messbare Veränderung der magnetischen Eigenschaften der Kolbenstange von Korngrenzen im Material abhängt, die sich über die Länge der Kolbenstange als nicht ausreichend homogen erweisen.

Daher besteht ein weiterer Aspekt der vorliegenden Erfindung darin, in der Auswerteeinheit über einen Verstellbereich der Kolbenstange hinweg ermittelte, positionsabhängige Kalibrierwerte zu hinterlegen, um die Messgenauigkeit zu erhöhen. Aufgrund dieser Kalibrierwerte kann dann aus einem vom Messsensor gelieferten Messsignal und der bekannten Position der Kolbenstange eine Größe für die auf die Kolbenstange wirkende Kraft bestimmt werden.

Da die magnetischen Eigenschaften der Kolbenstange wie erwähnt über deren Gesamtlänge nicht homogen sind, besteht eine Erkenntnis der Erfindung darin, die Ermittlung von Kräften anhand einer Kalibrierung des Messsystems durchzuführen, wobei die Kalibrierung nicht nur an einem Punkt der Kolbenstange, sondern an mehreren, über den Verstellbereich der Kolbenstange verteilt angeordnete Punkte durchgeführt wird.

Für eine Kalibrierung des Magnetsensors wird das Zylinderkolbenaggregat und hierbei insbesondere das aus dem Arbeitszylinder herausragende Ende der Kolbenstange einer in axialer Richtung (in Bezug auf die Kolbenstange) wirkenden Referenzkraft ausgesetzt. Die Kalibrierung erfolgt an mehreren Positionen der Kolbenstange. Hierbei werden sowohl die aktuelle axiale Position des Arbeitszylinders als auch die Kalibrierwerte des Magnetsensors in der Auswerteeinheit gespeichert. Zur Ermittlung der aktuellen Position der Kolbenstange können verschiedene Positionserkennungsprinzipien zum Einsatz kommen.

Bevorzugt wird in jeder Messposition der Kolbenstange mehrere Messungen mit zwei oder mehr unterschiedlich hohen Referenzkräften (d.h. einem Kollektiv an Referenzkräften) gemessen. Auf diese Weise kann die Genauigkeit der Kalibrierung für unterschiedlich hohe Kräfte erhöht werden, indem nicht nur ein linearer Zusammenhang zwischen Kraft und Änderung der magnetischen Eigenschaft vorausgesetzt wird. Im Prinzip ist es jedoch möglich, eine Kalibrierung mit nur einem Kraftwert pro Messposition durchzuführen. Als zweiter Wert bzw. Nulldurchgang dient dann die kraftfreie Situation, d.h. Kraft ist null.

Zur Bestimmung der Position der Kolbenstange weist das Zylinderkolbenaggregat vorzugsweise ein Positionserkennungssystem auf. Das Positionserkennungssystem kann weiter bevorzugt insbesondere direkt ins Führungsstück integriert werden. Im Betrieb übernimmt die Auswerteeinheit die aktuelle Position der Kolbenstange vom Positionserkennungssystem, um die entsprechenden, für diese Position geltenden Kalibrierwerte bei der Kraftmessung zu berücksichtigen. Mit den positionsgebundenen Kalibrierwerten kann die Messgenauigkeit des Magnetsensors deutlich erhöht und somit ein präziser Wert für die Kraft aus dem Messsignal berechnet werden.

Bei einer bevorzugten Ausführungsform wird ein optisches Positionserkennungssystem eingesetzt, um die Position der Kolbenstange zu ermitteln. Ein solches Positionserkennungssystem kann ein auf der Kolbenstange aufgebrachtes, optisch erfassbares Codemuster und eine optische Scannereinheit zum Ablesen des Codemusters aufweisen. Ein entsprechendes Positionserkennungssystem ist in der EP 2 769 104 B1 beschrieben, auf die zur Vermeidung unnötiger Wiederholungen vollinhaltlich Bezug genommen wird.

Bei einer weiteren bevorzugten Ausführungsform der Erfindung ist vorgesehen, dass zwei oder mehr berührungslose Magnetsensoren in einer radialen Messebene umfangsverteilt um die Kolbenstange angeordnet sind. Insbesondere können vier berührungslose Magnetsensoren im jeweils 90°-Winkel um die Kolbenstange verteilt angeordnet werden. Mit mehreren umfangsverteilten Kraftsensoren ist eine genauere Kraftbestimmung möglich. Auf diese Weise können nämlich neben Axialkräften auch auf die Kolbenstange wirkende Biegemomente gemessen und gemessene Axialkräfte um die Biegemomente korrigiert werden.

Als Messsensor des Kraftmesssystems kommt bevorzugt ein Magnetsensor zum Einsatz, der mindestens eine Magnetfeldspule zur Erzeugung eines alternierenden Magnetfeldes aufweist, in dessen magnetischem Fluss die Kolbenstange angeordnet ist.

Bei einer bevorzugten Ausführung umfasst der Magnetsensor außerdem einen Magnetfelddetektor zur Detektion des von der Magnetfeldspule erzeugten Magnetfelds. Das Kraftmesssystem kann darüber hinaus eine Auswerteinheit zur Ermittlung einer Phasenverschiebung zwischen einem an die Magnetfeldspule angelegten alternierenden Anregungssignals und einem von dem Magnetfelddetektor aufgenommenen Messsignal aufweisen. Die genannte Phasenverschiebung dient hierbei als Messgröße für die auf der Kolbenstange lastende Kraft.

Als Magnetfelddetektor kann insbesondere eine Messspule dienen, wobei Messspule und Magnetfeldspule um einen gemeinsamen weichmagnetischen Kern angeordnet sein können.

Alternativ oder kumulativ können auch andere magnetische Eigenschaften z. B. eine Änderung der Magnetfeldrichtung, wie etwa eine Winkelverdrehung oder Verkippung der Magnetfeldlinien, oder eine Änderung des gemessenen magnetischen Flusses als Messsignal für die zu messende Kraft dienen. Bei einer alternativen Ausführungsform kann statt einer Phasendifferenz beispielsweise auch eine Veränderung einer elektrischen Verlustleistung durch in der Kolbenstange induzierter Wirbelströme gemessen werden.

Des Weiteren kann im Rahmen der vorliegenden Erfindung die Auswerteeinheit ausgebildet sein, über zwei oder mehr umfangsverteilt um die Kolbenstange angeordnete Messsensoren neben bezüglich der Kolbenstange axialen Kräften auch Biegemomente zu ermitteln und gemessene Axialkräfte um die Biegemomente zu korrigieren.

Das erfindungsgemäße Messsystem kann vorteilhaft bei Hydraulikzylindern in Stützauslegern von Arbeitsmaschinen zum Einsatz kommen. Daneben kann das Messsystem aber bei allen Arten von Zylinderkolbenaggregaten wie Hydraulik- oder Pneumatikzylindern verwendet werden.

Das erfindungsgemäße Kraftmesssystem kann verwendet werden, um an den hydraulischen Stützen einer Arbeitsmaschine die auf die Stützzylinder wirkenden Stützkräfte zu messen. Hieraus kann ermittelt werden, ob die Arbeitsmaschine umzukippen droht und gegebenenfalls ein weiteres Anheben oder Schwenken einer Last rechtzeitig durch eine Notabschaltung unterbunden werden. Bei anderen Anwendungen kann die an der Kolbenstange gemessene Kraft als Regelgröße verwendet werden, beispielsweise um eine gewünschte vom Hydraulikzylinder zu bewirkende Andruckkraft zu erreichen und zu halten. Ebenso kann eine Überlastschaltung realisiert werden, die ein Überschreiten einer für die jeweilige Anwendung maximal zulässigen Andruckkraft verhindert.

Weitere Vorteile und Ausgestaltungen werden im Folgenden anhand der Figuren erläutert. Dabei zeigt:
- Figur 1: eine Seitenansicht eines Hydraulikzylinders mit integriertem Kraftmesssystem,
- Figur 2: einen Längsschnitt durch den Hydraulikzylinder aus Figur 1 entlang der Schnittlinie A-A,
- Figur 3: einen Schnitt in radialer Richtung durch den Hydraulikzylinder aus Figur 1 entlang der Schnittlinie B-B,
- Figur 4: ein erstes Ausführungsbeispiel für einen berührungslosen Magnetsensor, und
- Figur 5: ein zweites Ausführungsbeispiel für einen berührungslosen Magnetsensor.
- Figuren 6a bis 6c: eine schematische Darstellung der Erfassung von Referenzwerten zur Mehrpunktkalibrierung des Magnetsensors in drei unterschiedlichen Positionen der Kolbenstange,
- Figur 7: eine Referenzwerttabelle mit positionsabhängigen Referenzwerten,
- Figur 8: ein Diagramm der im Kalibrierungsprozess eingesetzten Referenzkraftwerte und

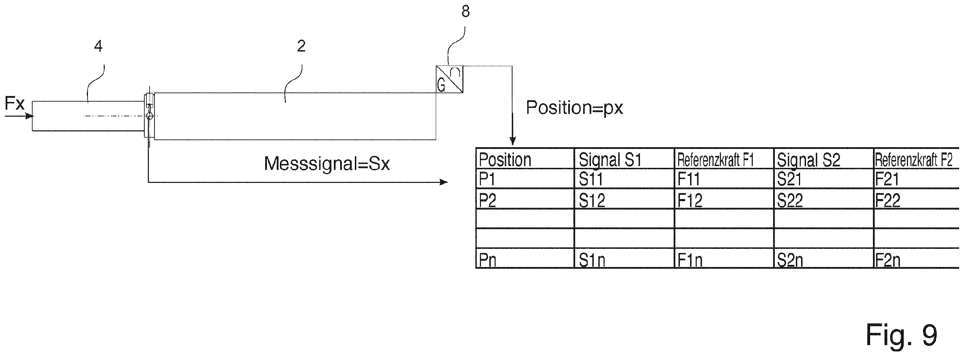

- Figur 9: eine schematische Darstellung der Kraftermittlung im Betrieb des Hydraulikzylinders unter Verwendung der Referenzwerttabelle.

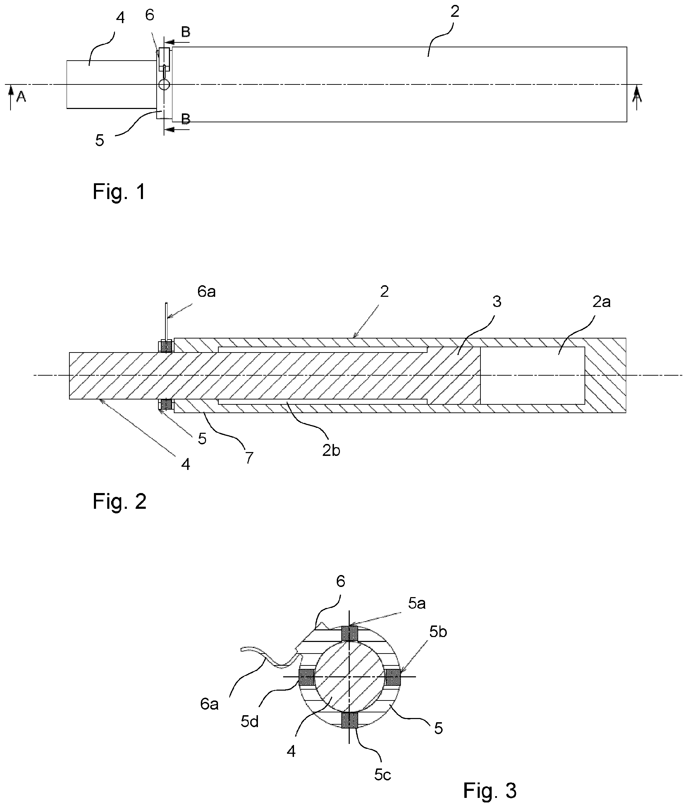

Figur 1 zeigt in einer Seitenansicht ein hydraulisches Zylinderkolbenaggregat 1. Dieses umfasst einen Hydraulikzylinder 2 mit einer aus dem Zylinder nach außen ragenden Kolbenstange 4. Um die Kolbenstange 4 liegt ein Haltering 5, welcher mehrere Kraftmesssensoren und eine integrierte Sensorelektronik 6 enthält. Der Haltering selbst kann beispielsweise aus Kunststoff oder Aluminium-Druckguss hergestellt sein. Ein axialer Schnitt durch den Hydraulikzylinder 1 entlang der Schnittlinie A-A ist in Figur 2 gezeigt.

Im Inneren des Zylinders 2 befindet sich ein beweglicher Kolben 3, der gegenüber der Innenwand des Zylinders 2 in an sich üblicher Weise durch hier nicht näher gezeigte Kolbendichtringe gleitend gedichtet ist und die Zylinderstange 4 trägt. Der Kolben 3 unterteilt den Innenraum des Zylinders in einen Arbeitsraum 2a und einen von der Kolbenstange 4 durchquerten Ringraum 2b. Am Austrittsende der Kolbenstange 4 ist der Hydraulikzylinder 2 mit einem sogenannten Führungsstück fluiddicht verschlossen. Die Kolbenstange 4 ist hierbei gegenüber dem Führungsstück 7 in an sich bekannter Weise durch hier nicht näher gezeigte Kolbenstangendichtungen gleitend gedichtet. Durch Beaufschlagung des Arbeitsraums 2a mit Hydraulikflüssigkeit wird der Kolben 3 nach links bewegt, wobei der Ringraum 2b zu einem Tank entlastet wird. Umgekehrt wird der Kolben 3 durch Druckbeaufschlagung des Ringraums 2b und Entlastung des Arbeitsraums 2a zu einem Tank nach rechts bewegt. Hydraulikleitungen und entsprechende Anschlüsse an den Zylinderräumen 2a, 2b sind hier der besseren Übersichtlichkeit halber nicht gezeigt, sind dem Fachmann aber an sich bekannt.

Der Haltering 5, der im Ausführungsbeispiel am Führungsstück 7 angebracht ist, beherbergt eine Messvorrichtung zur Messung von auf der Kolbenstange 4 lastender Stützkräfte. Ein Schnitt durch den Haltering 5 in einer radialen Ebene entlang der Schnittlinie B-B ist in Figur 3 gezeigt. Der Haltering 5 beherbergt vier, jeweils im 90° Winkel um die Kolbenstange 4 verteilt angeordnete Magnetsensoren 5a, 5b, 5c, 5d, deren Funktion nachfolgend erläutert wird. Außerdem enthält der Haltering 5 eine zur Ansteuerung der Magnetsensoren dienende integrierte Sensorelektronik 6, zu der ein Anschlusskabel 6a mit Signal- und Stromleitungen führt.

Alternativ zu dem genannten Haltering 5 könnten die Magnetsensoren 5a-5d auch in das Führungsstück 7 integriert werden.

Das der vorliegenden Erfindung zugrundeliegende Messprinzip beruht auf der Erkenntnis, dass sich magnetische Eigenschaften von Festkörpern unter mechanischer Belastung verändern. Daher nutzt die vorliegende Erfindung ein berührungsloses magnetisches Messverfahren, um stressbedingte Veränderungen einer magnetischen Eigenschaft der Kolbenstange 4 zu messen und hieraus auf die auf der Kolbenstange 4 lastenden Kraft zu schließen.

Zu diesem Zweck ist die Kolbenstange 4 aus einem ferromagnetischen Material wie etwa Eisen oder einer Eisen-Nickel-Verbindung hergestellt, besitzt also eine magnetische Permeabilität, die wesentlich größer als 1 ist - typischerweise im Bereich 100 bis 300.000.

Zur Messung der stressbedingten Änderung magnetischer Eigenschaften im Material der Kolbenstange 4 wird erfindungsgemäß ein äußeres Magnetfeld angelegt. Messbare Veränderungen, die im Rahmen der vorliegenden Erfindung erfasst werden können, sind beispielsweise eine Veränderung des Verlaufs der Feldlinien, also eine Verkippung, Verdrehung oder Richtungsänderung des magnetischen Feldes, eine Änderung der magnetischen Feldstärke bzw. Flussdichte, eine Phasenverschiebung zwischen einem Anregungssignal und dem hierdurch erzeugten Magnetfeld oder ein Anstieg einer elektrischen Verlustleistung aufgrund von in der Kolbenstange 4 induzierter Wirbelströme.

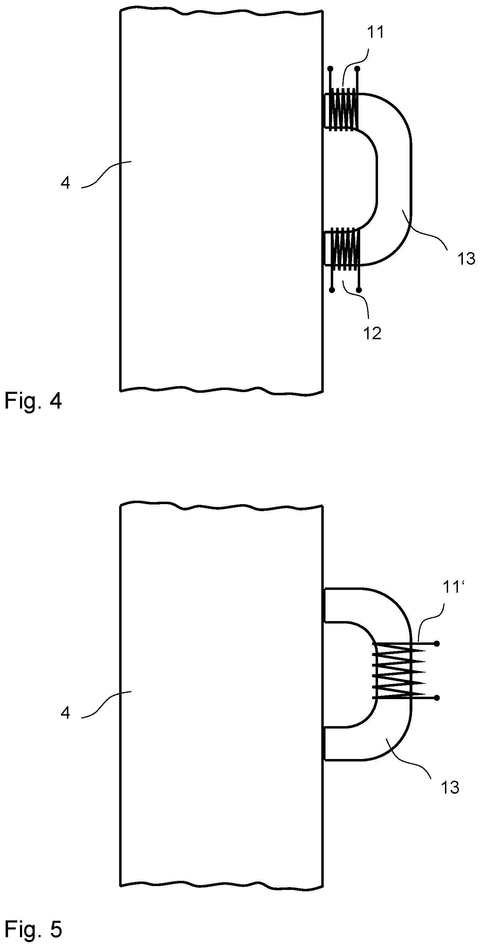

In Figur 4 ist beispielhaft eine Messanordnung gezeigt, die in den Magnetsensoren 5a - 5d enthalten sein kann. Sie umfasst eine erste Magnetfeldspule 11, mit deren Hilfe ein alternierendes Magnetfeld erzeugt wird. Hierzu wird an die Anschlüsse der Magnetfeldspule 11 eine Wechselspannung angelegt. Daneben ist eine zweite Spule 12 vorgesehen, welche als Messspule dient, um den von der ersten Spule 11 erzeugten magnetischen Fluss zu messen. Magnetfeldspule 11 und Messspule 12 sind auf einem gemeinsamen, hufeisenförmigen Kern 13 angeordnet, der aus einem weichmagnetischen Material wie etwa Weicheisen oder Ferrit besteht. Der von der Magnetfeldspule 11 erzeugte magnetische Fluss ist daher weitgehend innerhalb des magnetischen Kerns 13 konzentriert. Die beiden offenen Enden des hufeisenförmigen weichmagnetischen Kerns 13 grenzen an die Außenwand der Kolbenstange 4 an, sodass die austretenden Feldlinien durch das Material der Kolbenstange 4 von einem Polschuh des hufeisenförmigen Kerns 13 zum anderen verlaufen.

Im Rahmen einer Messung wird an die Magnetfeldspule 11 eine Wechselspannung angelegt, sodass ein Magnetfeld mit wechselnder Polarität erzeugt wird. Dieses wird mittels der Messspule 12 detektiert. Hieraus wird eine Phasendifferenz zwischen dem Eingangssignal und der Magnetfeldspule 11 und dem Ausgangssignal der Messspule 12 ermittelt. Eine Änderung dieser Phasendifferenz, also eine Vergrößerung oder Verkleinerung der Phasenverschiebung, stellt ein Maß für eine auf der Kolbenstange lastende Kraft dar.

Eine alternative Messanordnung ist in Figur 5 beispielhaft dargestellt. Hierbei ist wiederum eine Magnetfeldspule 11 mit einem hufeisenförmigen Kern 13 vorgesehen. Eine dedizierte Messspule ist jedoch nicht erforderlich. Vielmehr wird an die Magnetfeldspule 11 eine Wechselspannung angelegt und eine Verlustleistung in der Spule 11 ermittelt. Eine Veränderung der Verlustleistung ist hierbei wiederum ein Signal für die auf der Kolbenstange lastende Kraft. Die Verlustleistung beruht auf in der Kolbenstange 4 induzierten Wirbelströmen. Diese verändern sich durch mechanische Spannungszustände im Material der Kolbenstange 4 und sind somit als Veränderung der Verlustleistung detektierbar.

Die anhand der Figuren 4 und 5 erläuterten Messaufgaben sind lediglich beispielhafter Natur. Daneben sind weitere Messanordnungen möglich, die auf demselben Messprinzip beruhen. Beispielsweise können zusätzliche Spulen vorgesehen sein, mit denen eine magnetische Remanenz im Material der Kolbenstange 4 oder ein sich verändernder Abstand zwischen Spulenkern 13 und Kolbenstange 4 kompensiert werden können. Auch kann ein Kern 13 mit mehr als zwei Polschuhen verwendet werden, um einen magnetischen Fluss in mehrere Richtungen zu erzeugen und zu detektieren.

Das erläuterte magnetische Messprinzip arbeitet grundsätzlich berührungsfrei, wobei berührungsfrei hierbei nicht bedeutet, dass sich der hufeisenförmige Kern 13 und die Kolbenstange 4 tatsächlich nicht berühren dürfen oder zwischen diesen ein Luftspalt vorhanden sein müsste, sondern dass der Magnetsensor selbst nicht im Kraftfluss angeordnet ist, sondern von außen eine durch die Kolbenstange 4 übertragene Kraft detektiert.

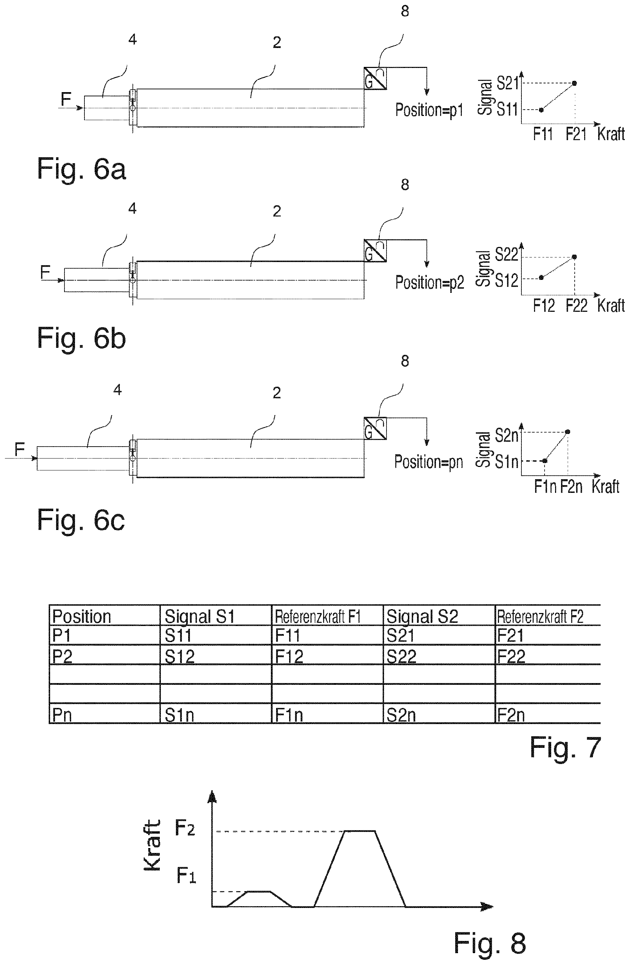

Anhand der Figuren 6a bis c, 7 und 8 wird nachfolgend die Ermittlung von Referenzwerten zur Mehrpunktkalibrierung des Messsystems erläutert. In den Figu ren 6a bis 6c ist die Kolbenstange des Hydraulikzylinders 2 in jeweils unterschiedlichen Positionen gezeigt. In jeder Position wird ein Positionswert p1, p2, p3 ermittelt. Dies geschieht mit Hilfe eines hier nur schematisch dargestellten Positionserkennungssystems 8. In jeder Position i (i=1 bis n) wird der Hydraulikzylinder 2 einem Referenzkraftkollektiv ausgesetzt. Das Referenzkraftkollektiv umfasst mindestens zwei jeweils axial wirkende Kräfte mit verschiedenen Amplituden (Kraftwerten). Für die jeweiligen Referenzkraftwerte (F₁ᵢ, F₂ᵢ, ....) werden Messsignale in den Magnetsensoren (S₁ᵢ, S₂ᵢ,...) erzeugt und mit der Angabe zur aktuellen Position pᵢ der Kolbenstange in der Auswerteeinheit gespeichert. Im einfachsten Fall kann wie bereits erwähnt auch mit nur einer Referenzkraft pro Messposition gearbeitet werden, indem als zweiter Wert der unbelastete Fall (Kraft ist null) gewählt wird.

Alternativ lässt sich der Kalibrierungsprozess durchführen, in dem der Hydraulikzylinder an allen gewünschten Positionen pᵢ (i=1 bis n) der ersten Referenzkraft des Kollektivs ausgesetzt wird. Die Messsignale werden mit der Angabe zu den Positionen pᵢ in der Auswerteeinheit gespeichert. Die weiteren Referenzkräfte des Kollektivs werden analog in weiteren Durchläufen auf der Zylinderstange aufgebracht. Dadurch kann der Kalibrierungsaufwand reduziert werden, vor allem wenn die Amplitude der Referenzkräfte für jede Position konstant gehalten wird.

Das Referenzkollektiv mit zwei Kraftniveaus ist schematisch in Figur 8 dargestellt. Das Referenzkollektiv kann selbstverständlich auch mehr als zwei Kraftwerte beinhalten, um auf einer Seite die Genauigkeit der Kraftermittlung aus dem Signal zu erhöhen. Das Kraftkollektiv kann auch unterschiedliche Referenzkraftwerte für unterschiedliche Positionen beinhalten, d.h. die Amplituden der Referenzkräfte eines Kollektivs für eine Position können unterschiedlich von den Amplituden der Referenzkräfte des Kollektivs für andere Positionen sein. Für die Ermittlung der Referenzwerte ist es jedoch vorteilhaft, wenn die Amplituden der Referenzkräfte des Kollektivs in jeder Position der Kolbenstange während der Kalibrierung konstant bleiben. Dies vereinfacht die Ausführung der Kalibrierung sowie die spätere Auswertung der Messsignale während des Betriebs.

Jede einzelne, während des Kalibrierungsprozesses durchgemessene Position pᵢ wird zusammen dem gemessenen Signalwert Sᵢⱼ und der zugehörigen Referenzkraft Fᵢⱼ in Form einer Referenzwerttabelle T in der Auswerteeinheit gespeichert. Eine beispielhafte Tabelle ist in Figur 7 gezeigt.

Die Ermittlung einer unbekannten, auf die Kolbenstange wirkenden Kraft Fₓ im Betrieb des Hydraulikzylinders ist in Figur 10 dargestellt. Die Umrechnung des Messsignals vom Sensor Sₓ erfolgt in der Auswerteeinheit anhand der dort gespeicherten Referenzwerttabelle T, indem die Auswerteeinheit der Referenzwerttabelle T die positionsbezogene Kalibrierwerte entnimmt. Die Information über die aktuelle Position der Kolbenstange 4 liefert das Positionserkennungssystem 8. Die Umrechnung kann durch lineare Interpolation oder Extrapolation erfolgen. Alternativ kann die Auswerteeinheit die Referenzwerte in Form einer Referenzfunktion speichern. Ebenso liegt es im Rahmen der Erfindung, eine nicht-lineare Interpolation oder Extrapolation vorzunehmen, wenn eine entsprechende nichtlineare Abhängigkeit der kraftinduzierten Veränderung der magnetischen Eigenschaft der Kolbenstange zuvor ermittelt wurde.

Liegt die aktuelle Position der Kolbenstange nicht im Speicher der Auswerteeinheit bzw. der gespeicherten Referenzwerttabelle vor, so können die entsprechenden Kalibrierwerte näherungsweise durch lineare Interpolation oder Extrapolation anderer Positionen berechnet und für die Ermittlung der Kraft aus dem Messsignal Sₓ eingesetzt werden. Wurde zuvor eine nichtlineare Abhängigkeit der Messwerte über den Längsverlauf der Kolbenstange ermittelt, so liegt auch hierbei eine nicht-lineare Interpolation oder Extrapolation im Rahmen der Erfindung.

Im vorstehend erläuterten Ausführungsbeispiel war zunächst davon ausgegangen, dass die Kolbenstange bezüglich des Hydraulikzylinders drehinvariant ist. Dies kann beispielsweise durch eine entsprechende externe Führung der Kolbenstange oder auch durch den drehinvarianten Einbau des Hydraulikzylinders und entsprechende endseitige Montagemittel bewirkt werden. Soll eine Verdrehung des Kolbens bezüglich des Zylinders zugelassen werden, so können zur Berücksichtigung des Drehwinkels entsprechende Referenzwerte nicht nur in unterschiedlichen Positionen der Kolbenstange in Längsrichtung, sondern zusätzlich auch für jede Längsposition auch mehrere Referenzwerte in unterschiedlichen Drehstellungen ermittelt werden.

Im Rahmen der vorliegenden Erfindung wird das erläuterte Messprinzip zur Messung längswirkender Kräfte in der Kolbenstange 4 eines Zylinderkolbenaggregates eingesetzt. Hierbei erlaubt die Anordnung von insbesondere vier Messsensoren, die, wie in Figur 3 gezeigt, umfangsverteilt um die Kolbenstange 4 angeordnet werden, neben Axialkräften auch auf die Kolbenstange 4 wirkende Biegemomente zu ermitteln und diese im Rahmen der Signalauswertung zu kompensieren und somit eine zuverlässige und genaue Ermittlung der Axialkräfte zu gewährleisten. Die Ermittlung von Referenzwerten zur Mehrpunktkalibrierung des Messsystems erfolgt in der zuvor erläuterten Weise für jeden der vier Messsensoren 5a-5d. Die Kalibrierung der vier Sensoren 5a-5d kann gleichzeitig in der jeweiligen Position pᵢ stattfinden.

Die Kompensation einer Biegespannung berechnet sich hieraus folgendermaßen. Unter Biegung addieren sich zu der Axialspannung σₐ, die nur von einer Axialkraft abhängt, zusätzliche Biegespannungen σ_{b}. Von zwei gegenüberliegende Sensoren misst nun der eine Sensor die Änderung des Magnetfelds bedingt durch eine Normalspannung mit dem Betrag σₐ+σ_{b}, während der andere Sensor die Änderung des Magnetfelds bedingt durch die Normalspannung mit der Betrag σₐ-σ_{b} misst. Addiere man die beiden Werte und teilt sie durch zwei, ergibt sich die Änderung des Magnetfelds, die nur durch Axialspannung bzw. Axialkraft verursacht wird. Mit den zwei weiteren, gegenüberliegenden Sensoren kann die Messung auf Plausibilisierung überprüft werden. Theoretisch wäre also eine Biegespannungskompensation mit nur zwei gegenüberliegenden Sensoren realisierbar.

Die zuvor beschriebene Mehrpunktkalibrierung erfolgt wie erwähnt lediglich unter Axialkräften. Der Querkrafteinfluss und dadurch verursachte Biegespannungen werden rein rechnerisch im Betrieb herausgerechnet und so kompensiert. Die Kalibrierung dient nur dazu, den Zusammenhang zwischen Sensorsignal und der tatsächlichen Kraft zu ermitteln.

Darüber hinaus ist es möglich die Biegespannung bzw. die entsprechende Querkraft auszurechnen. Hier sollen die Signale von gegenüberliegenden Sensoren voneinander abgezogen werden. Von jeder Paarung ergibt sich die Biegespannung in einer Richtung. Der Betrag von Gesamtspannung ist der vektorielle Betrag von zwei berechneten Biegespannungen. Dieser Wert ist allerdings für viele Anwendungen nicht von Interesse, da als Regelgröße meist nur die Axialkraft benötigt wird.

Das erfindungsgemäße Messsystem bietet eine deutlich vereinfachte Integration der Sensorik in einem Zylinderkolbenaggregat sowie eine Vereinfachung bei der Stromversorgung und Signalführung des Messsystems. Außerdem wird eine deutlich verbesserte Robustheit gegenüber mechanischer Überlastung oder Umwelteinflüssen, wie etwa EMV-Unempfindlichkeit, Temperaturbeständigkeit, Vibrationsbeständigkeit oder Korrosionsschutz erzielt.

## Patentansprüche

1. Zylinder/Kolben-Aggregat mit einem Arbeitszylinder (2), einem innerhalb des Arbeitszylinders (2) dichtend gelagerten, längsverschieblichen Kolben (3), der zumindest auf einer Seite eine Kolbenstange (4) trägt, und mit einem Führungsstück (7), welches einen die Kolbenstange (4) umgebenden Ringraum (2b) des Arbeitszylinders (2) dichtend abschließt, wobei die Kolbenstange (4) an ihrem dem Kolben (3) abgewandten Ende aus dem Arbeitszylinder (2) herausragt und an dem Führungsstück (7) gleitend gelagert ist und wobei das Zylinder/Kolben-Aggregat außerdem ein mit der Kolbenstange zusammenwirkendes Messsystem (5, 5a, 5b, 5c, 5d, 6) zum Erfassen einer auf der Kolbenstange (4) lastenden Kraft aufweist,
**dadurch gekennzeichnet, dass**
die Kolbenstange (4) zumindest abschnittsweise aus einem ferromagnetischen Material besteht und das Messsystem mindestens einen an dem Führungsstück (7) angeordneten Messsensor (5a, 5b, 5c, 5d) und eine mit dem Messsensor verbundene Auswerteeinheit umfasst, wobei der Messsensor (5a, 5b, 5c, 5d) als berührungsloser Magnetsensor ausgeführt ist, welcher eine lastabhängige Veränderung einer magnetischen Eigenschaft des ferromagnetischen Materials detektiert, und die Auswerteeinheit ausgebildet ist, aus von dem Messsensor (5a, 5b, 5c, 5d) gelieferten Messsignalen in Abhängigkeit der Position des Kolbens anhand von gespeicherten, positionsabhängigen Referenzwerten die auf die Kolbenstange (4) wirkende Kraft zu ermitteln.

2. Zylinder/Kolben-Aggregat nach Anspruch 1, bei dem zwei oder mehr berührungslose Magnetsensoren (5a, 5b, 5c, 5d) in einer radialen Messebene umfangsverteilt um die Kolbenstange (4) angeordnet sind.

3. Zylinder/Kolben-Aggregat nach Anspruch 2, bei dem insgesamt vier berührungslose Magnetsensoren (5a, 5b, 5c, 5d) in jeweils 90° Winkel um die Kolbenstange (4) verteilt angeordnet sind, insbesondere, bei dem eine rechnerische Kompensation von Biegemomenten durch Mittelwertbildung von Messsignalen gegenüberliegender Sensoren erfolgt.

4. Zylinder/Kolben-Aggregat nach einem der vorangehenden Ansprüche, bei dem der berührungslose Magnetsensor (5a, 5b, 5c, 5d) mindestens eine Magnetfeldspule (11, 11') zur Erzeugung eines alternierenden Magnetfeldes aufweist, in dessen magnetischem Fluss die Kolbenstange (4) angeordnet ist.

5. Zylinder/Kolben-Aggregat nach Anspruch 4, bei dem der berührungslose Magnetsensor (5a, 5b, 5c, 5d) einen Magnetfelddetektor (12) zur Detektion des von der Magnetfeldspule (11) erzeugten Magnetfelds umfasst und bei dem das Messsystem eine Auswerteinheit zur Ermittlung einer Phasenverschiebung zwischen einem an die Magnetfeldspule (11) angelegten alternierenden Anregungssignals und einem von dem Magnetfelddetektor (12) aufgenommenen Messsignals aufweist.

6. Zylinder/Kolben-Aggregat nach Anspruch 5, bei dem als Magnetfelddetektor eine Messspule (12) dient, wobei Messspule (12) und Magnetfeldspule (11) um einen gemeinsamen weichmagnetischen Kern (13) angeordnet sind.

7. Zylinder/Kolben-Aggregat nach einem der Ansprüche 2 oder 3, bei dem die Auswerteinheit über die zwei oder mehr umfangsverteilt um die Kolbenstange angeordneten Magnetsensoren (5a, 5b, 5c, 5d) neben bezüglich der Kolbenstange (4) axialen Kräften auch Biegemomente ermittelt und/oder gemessene Axialkräfte um die Biegemomente korrigiert.

8. Zylinder/Kolben-Aggregat nach einem der vorangehenden Ansprüche, mit einer Positionsmesseinrichtung, welche mit der Auswerteeinheit signaltechnisch verbunden ist, um ein von der Position des Kolbens abhängiges Positionssignal bereitzustellen.

9. Zylinder/Kolben-Aggregat nach Anspruch 8, bei der die Positionsmesseinrichtung eine Optikeinheit zur Detektion eines auf der Kolbenstange aufgebrachten Codemusters aufweist.

10. Verfahren zur Kalibrierung eines Zylinder/Kolben-Aggregats für eine spätere Erfassung einer auf der Kolbenstange (4) lastenden Kraft, wobei das Zylinder/Kolben-Aggregat einen Arbeitszylinder (2), einem innerhalb des Arbeitszylinders (2) dichtend gelagerten, längsverschieblichen Kolben (3), der zumindest auf einer Seite eine zumindest abschnittsweise aus einem ferromagnetischen Material bestehende Kolbenstange (4) trägt, und ein Führungsstück (7) aufweist, welches einen die Kolbenstange (4) umgebenden Ringraum (2b) des Arbeitszylinders (2) dichtend abschließt, und die Kolbenstange (4) an ihrem dem Kolben (3) abgewandten Ende aus dem Arbeitszylinder (2) herausragt und an dem Führungsstück (7) gleitend gelagert ist,
**dadurch gekennzeichnet, dass**
bei dem Verfahren in mehreren Positionen der Kolbenstange jeweils eine axial wirkende Referenzkraft auf die Kolbenstange ausgeübt wird, und dass mittels mindestens eines als berührungslosem Magnetsensor ausgeführten und an dem Führungsstück (7) angeordneten Messsensors (5a, 5b, 5c, 5d) eine lastabhängige Veränderung einer magnetischen Eigenschaft des ferromagnetischen Materials detektiert wird, und die jeweilige Position des Arbeitszylinders und ermittelte Messwert als Kalibrierwerte in einer Auswerteeinheit gespeichert werden.

11. Verfahren nach Anspruch 10, bei dem wird in jeder Messposition der Kolbenstange mehrere Messungen mit zwei oder mehr unterschiedlich hohen Referenzkräften durchgeführt und die Messwerte in Abhängigkeit des Wertes der Referenzkraft und der Position der Kolbenstange als Kalibrierwerte in der Auswerteeinheit gespeichert werden.

## Claims

1. Cylinder piston assembly comprising a working cylinder (2), a longitudinally displaceable piston (3) which is sealingly mounted within the working cylinder (2) and which carries a piston rod (4) on at least one side, and comprising a guide piece (7) which sealingly closes off an annular space (2b) of the working cylinder (2) surrounding the piston rod (4), wherein the piston rod (4) projects out of the working cylinder (2) at its end facing away from the piston (3) and is slidably mounted on the guide piece (7), and wherein the cylinder piston assembly further has a measuring system (5, 5a, 5b, 5c, 5d, 6) cooperating with the piston rod for sensing a force acting on the piston rod (4),
**characterised in that**
the piston rod (4) consists at least in sections of a ferromagnetic material, and the measuring system comprises at least one measuring sensor (5a, 5b, 5c, 5d) arranged on the guide piece (7) and an evaluation unit connected to the measuring sensor, wherein the measuring sensor (5a, 5b, 5c, 5d) is configured as a contactless magnetic sensor which detects a load-dependent change in a magnetic property of the ferromagnetic material, and the evaluation unit is configured to determine the force acting on the piston rod (4) from measurement signals supplied by the measurement sensor (5a, 5b, 5c, 5d) as a function of the position of the piston by reference to stored, position-dependent reference values.

2. Cylinder piston assembly according to claim 1, in which two or more contactless magnetic sensors (5a, 5b, 5c, 5d) are arranged in a radial measuring plane circumferentially distributed around the piston rod (4).

3. Cylinder piston assembly according to claim 2, in which a total of four contactless magnetic sensors (5a, 5b, 5c, 5d) are arranged in a distribution at 90° angles around the piston rod (4), in particular in which a computational compensation of bending moments occurs by averaging measurement signals from opposing sensors.

4. Cylinder piston assembly according to any one of the preceding claims, in which the contactless magnetic sensor (5a, 5b, 5c, 5d) has at least one magnetic field coil (11, 11') for generating an alternating magnetic field, in the magnetic flux of which the piston rod (4) is arranged.

5. Cylinder piston assembly according to claim 4, in which the contactless magnetic sensor (5a, 5b, 5c, 5d) comprises a magnetic field detector (12) for detecting the magnetic field generated by the magnetic field coil (11), and in which the measuring system has an evaluation unit for determining a phase shift between an alternating excitation signal applied to the magnetic field coil (11) and a measurement signal picked up by the magnetic field detector (12).

6. Cylinder piston assembly according to claim 5, in which a measuring coil (12) serves as magnetic field detector, wherein measuring coil (12) and magnetic field coil (11) are arranged around a common soft magnetic core (13).

7. Cylinder piston assembly according to any one of claims 2 or 3, in which the evaluation unit, via the two or more magnetic sensors (5a, 5b, 5c, 5d) arranged in a circumferential distribution around the piston rod, also determines bending moments in addition to axial forces with respect to the piston rod (4) and/or corrects measured axial forces by the bending moments.

8. Cylinder piston assembly according to any one of the preceding claims, comprising a position measuring device which is connected for signalling to the evaluation unit in order to provide a position signal dependent on the position of the piston.

9. Cylinder piston assembly according to claim 8, in which the position measuring device has an optical unit for detecting a code pattern applied to the piston rod.

10. Method for calibrating a cylinder piston assembly for subsequent sensing of a force acting on the piston rod (4), wherein the cylinder piston assembly has a working cylinder (2), a longitudinally displaceable piston (3) which is sealingly mounted within the working cylinder (2) and which carries on at least one side a piston rod (4) consisting at least in sections of a ferromagnetic material, and a guide piece (7) which sealingly closes off an annular space (2b) of the working cylinder (2) surrounding the piston rod (4), and the piston rod (4) projects out of the working cylinder (2) at its end facing away from the piston (3) and is slidably mounted on the guide piece (7),
**characterised in that**
in the method, an axially acting reference force is exerted on the piston rod in each of a plurality of positions of the piston rod, and **in that** a load-dependent change in a magnetic property of the ferromagnetic material is detected by means of at least one measuring sensor (5a, 5b, 5c, 5d) configured as a contactless magnetic sensor and arranged on the guide piece (7), and the respective position of the working cylinder and determined measured value are stored as calibration values in an evaluation unit.

11. Method according to claim 10, in which a plurality of measurements with two or more reference forces of different magnitude are carried out in each measuring position of the piston rod and the measured values are stored as calibration values in the evaluation unit as a function of the value of the reference force and the position of the piston rod.

## Revendications

1. Groupe cylindre/piston avec un cylindre de travail (2), un piston (3) mobile longitudinalement, logé de manière étanche dans le cylindre de travail (2) qui porte au moins sur un côté une tige de piston (4), et avec une pièce de guidage (7) qui termine de manière étanche un espace annulaire (2b) entourant la tige de piston (4) du cylindre de travail (2), dans lequel la tige de piston (4) dépasse sur son extrémité éloignée du piston (3) du cylindre de travail (2) et est logée de manière coulissante au niveau de la pièce de guidage (7) et dans lequel le groupe cylindre/piston présente en outre un système de mesure (5, 5a, 5b, 5c, 5d, 6) coagissant avec la tige de piston pour la détection d'une force pesant sur la tige de piston (4),
**caractérisé en ce que**
la tige de piston (4) se compose au moins par sections d'un matériau ferromagnétique et le système de mesure comporte au moins un capteur de mesure (5a, 5b, 5c, 5d) agencé au niveau de la pièce de guidage (7) et une unité d'évaluation reliée au capteur de mesure, dans lequel le capteur de mesure (5a, 5b, 5c, 5d) est réalisé comme capteur magnétique sans contact qui détecte une modification dépendant de la charge d'une propriété magnétique du matériau ferromagnétique, et l'unité d'évaluation est réalisée afin de calculer la force agissant sur la tige de piston (4) à partir des signaux de mesure fournis par le capteur de mesure (5a, 5b, 5c, 5d) en fonction de la position du piston à l'aide de valeurs de référence enregistrées dépendant de la position.

2. Groupe cylindre/piston selon la revendication 1, pour lequel deux ou plus capteurs magnétiques sans contact (5a, 5b, 5c, 5d) sont agencés dans un plan de mesure radial de manière répartie sur la périphérie autour de la tige de piston (4).

3. Groupe cylindre/piston selon la revendication 2, pour lequel dans l'ensemble quatre capteurs magnétiques sans contact (5a, 5b, 5c, 5d) sont agencés de manière répartie dans un angle de respectivement 90° autour de la tige de piston (4), en particulier pour lequel une compensation informatique de couples de flexion est effectuée par formation de valeur moyenne de signaux de mesure de capteurs opposés.

4. Groupe cylindre/piston selon l'une quelconque des revendications précédentes, pour lequel le capteur magnétique sans contact (5a, 5b, 5c, 5d) présente au moins une bobine de champ magnétique (11, 11') pour la génération d'un champ magnétique alternatif, dans le flux magnétique duquel la tige de piston (4) est agencée.

5. Groupe cylindre/piston selon la revendication 4, pour lequel le capteur magnétique sans contact (5a, 5b, 5c, 5d) comporte un détecteur de champ magnétique (12) pour la détection du champ magnétique généré par la bobine de champ magnétique (11) et pour lequel le système de mesure présente une unité d'évaluation pour le calcul d'un déphasage entre un signal d'excitation alternatif appliqué sur la bobine de champ magnétique (11) et un signal de mesure reçu par le détecteur de champ magnétique (12).

6. Groupe cylindre/piston selon la revendication 5, pour lequel une bobine de mesure (12) sert de détecteur de champ magnétique, dans lequel la bobine de mesure (12) et la bobine de champ magnétique (11) sont agencées autour d'un noyau (13) magnétique doux commun.

7. Groupe cylindre/piston selon l'une quelconque des revendications 2 ou 3, pour lequel l'unité d'évaluation calcule également des couples de flexion par le biais des deux ou plus capteurs magnétiques (5a, 5b, 5c, 5d) agencés de manière répartie sur la périphérie autour de la tige de piston, outre des forces axiales se référant à la tige de piston (4) et/ou corrige des forces axiales mesurées des couples de flexion.

8. Groupe cylindre/piston selon l'une quelconque des revendications précédentes, avec un dispositif de mesure de position qui est relié à l'unité d'évaluation en signal afin de fournir un signal de position dépendant de la position du piston.

9. Groupe cylindre/piston selon la revendication 8, pour lequel le dispositif de mesure de position présente une unité optique pour la détection d'un motif de code appliqué sur la tige de piston.

10. Procédé d'étalonnage d'un groupe cylindre/piston pour une détection ultérieure d'une force pesant sur la tige de piston (4), dans lequel le groupe cylindre/piston porte un cylindre de travail (2), un piston (3) mobile longitudinalement, logé de manière étanche dans le cylindre de travail (2) qui porte au moins sur un côté une tige de piston (4) se composant d'un matériau ferromagnétique, et présente une pièce de guidage (7) qui termine de manière étanche un espace annulaire (2b) entourant la tige de piston (4) du cylindre de travail (2), et la tige de piston (4) dépasse sur son extrémité éloignée du piston (3) du cylindre de travail (2) et est logée de manière coulissante au niveau de la pièce de guidage (7),
**caractérisé en ce que**
dans le procédé, dans plusieurs positions de la tige de piston, une force de référence agissant axialement est exercée sur la tige de piston, et qu'au moyen d'au moins un capteur de mesure (5a, 5b, 5c, 5d) agencé au niveau de la pièce de guidage (7) et réalisé comme capteur magnétique sans contact, une modification dépendant de la charge d'une propriété magnétique du matériau ferromagnétique est détectée, et la position respective du cylindre de travail et la valeur de mesure calculée sont enregistrées comme valeurs d'étalonnage dans une unité d'évaluation.

11. Procédé selon la revendication 10, pour lequel dans chaque position de mesure de la tige de piston, plusieurs mesures sont réalisées avec deux ou plus forces de référence de grandeur différente et les valeurs de mesure sont enregistrées en fonction de la valeur de la force de référence et de la position de la tige de piston comme valeurs d'étalonnage dans l'unité d'évaluation.
